# EUROPEAN PATENT APPLICATION

(11) **EP 2 223 741 A1**
(43) Date of publication of application: **01.09.2010**
(21) Application number: 09152808.3
(22) Date of filing: 13.02.2009
(51) Int. Cl.: B01J 19/00

(54) **Micro fluidic system, including a stack of process modules and heat exchange modules**

(71) Applicant: Nederlandse Organisatie voor Toegepast -Natuurwetenschappelijk Onderzoek TNO, 2628 VK Delft (NL)
(72) Inventor: van der Werff, Jeichienus Johannes, 3640 Molenbeersel (BE); Olieslagers, Ruud, 5612 DN Eindhoven (NL); Emmelkamp, Jurjen, 5705 KH Helmond (NL); de Zwart, Renatus Marius, 5655 JP Eindhoven (NL)
(74) Representative: Hatzmann, Martin

(57) **Abstract**

Micro fluidic system, including a stack of process modules (1), each comprising a module body and one or more processing channels and/or processing rooms inside the module's body, at least some of the process modules being flanked by heat exchange modules (2), wherein each heat exchange module is constituted by heat exchange members made of a solid material having good heat conducting properties and covering at least part of the surface of the processing module. Fluidic tubes (3) arranged for transportation of a temperature control fluid, each tube protruding through the relevant heat exchange members and being connected with them in a way to allow them to exchange heat between the temperature control fluid and the well conducting material of the heat exchange members.

## Description

The invention refers to a micro fluidic system, e.g. a microreactor, including a stack of process modules, each comprising a module body and one or more processing channels and/or processing rooms inside the module's body, at least some of the process modules being flanked by at least one heat exchange module at one or either side of the process module.

Such a system is known from W02007/112945, disclosing a micro fluidic system assembly comprises a stack of process modules made from a rigid first material and comprising reactive fluid passages for accommodating and guiding a reactive fluid. Heat exchange modules are provided, made from a ductile second material other than said first material and comprising heat exchange fluid passages for accommodating and guiding a heat exchange fluid. The process modules are flanked by one or two adjacent heat exchange modules.

Contrary to the prior art system, in the system according to the present invention each heat exchange module is substantially constituted by one or more heat exchange members made of a solid material having good heat conducting properties and covering at least part of the surface of the relevant processing module or modules. It has be found that, by using a solid material having good heat conducting properties, a more robust configuration can be made, which, besides, offers opportunities for individual heating and/or cooling separate sections of the processor modules.

Preferrably one or more fluidic tubes are provided which are arranged for transportation of a temperature control fluid, each tube protruding through the relevant heat exchange members and being connected with them in a way to allow them to exchange heat between the temperature control fluid and the well conducting material of the heat exchange members.

The heat exchange members may comprise heat exchange fingers extending between and/or along the surfaces of the relevant processing modules, as well as tube connection portions, arranged for interconnecting the relevant exchange member and at least one of said fluidic tubes.

In particular when the system includes a stack of processor modules which operate in parallel -thus increasing the total process throughput and production- it is preferred that the processing modules comprise holes passing through the processing modules and being in communicative connection with said processing channels and/or processing rooms inside the processing module's body and being in line with each other and with external connection means arranged to be used as inlet or inlets and outlet or outlets for the relevant processing liquids supplied to and removed from the processing modules respectively.

Hereinafter the invention will be discussed more in detail using an exemplary embodiment of a system according to the invention.
- Figure 1: shows a side view of a stack of process modules and heat exchange modules;
- Figure 2: shows a cross section view of the same stack over a line A-A;
- Figure 3: shows a cross section view of the same stack over a line B-B.

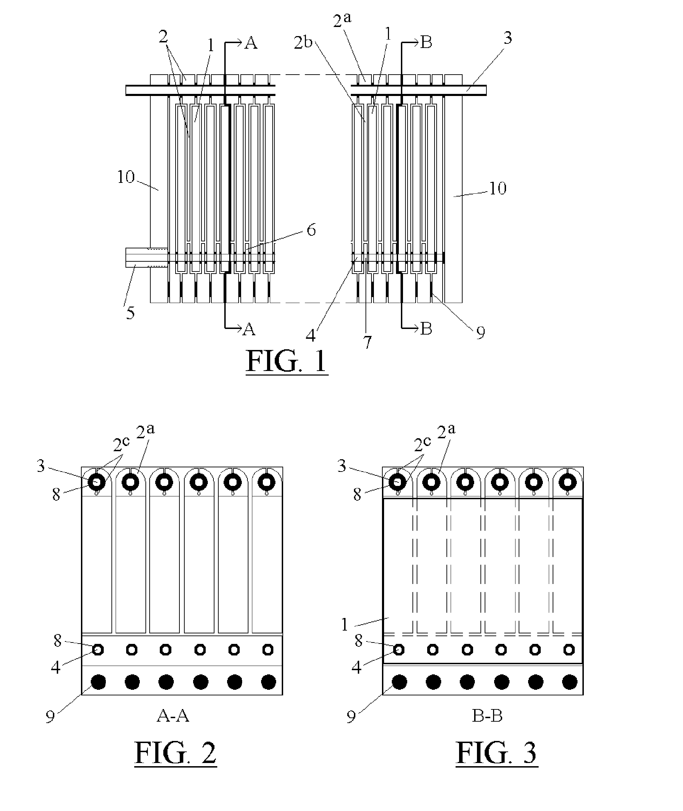

Figure 1 - 3 show -in different views- a micro fluidic system, including a stack of process modules 1, each comprising a module body and one or more processing channels and/or processing rooms inside the module's body, which are not shown explicitly in the figures. The process modules 1 are flanked by heat exchange modules; each of them being constituted by six (in this exemplary embodiment) heat exchange members 2 which are made of a solid material having good heat conducting properties. Each heat exchange member 2 covers at least part (one-sixth in this example) of the surface of the relevant processing modules.

The system shown in the figures, moreover, comprises fluidic tubes 3 which are arranged for transportation of a temperature control fluid from and to an external temperature control unit (not shown). The tubes 3 protrude through the relevant heat exchange members 2 and are connected with them in a way to allow them to exchange heat between the temperature control fluid and the well conducting material of the heat exchange members. As shown in the figures, the heat exchange members 2 are formed by heat exchange fingers 2a, extending between and/or along the surfaces of the relevant processing modules, and tube connection portions 2b which are arranged for interconnecting the relevant exchange member and at least one of said fluidic tubes. The tube connection portions 2b may e.g. be provided with a slot 2c for allowing the portions 2b to clamp around the tubes 3.

The processing modules 1 comprise holes 4 passing through the processing modules 1 which holes are in communicative connection with the (not shown) processing channels and/or processing rooms inside the processing module's body. When built together the holes 4 are in line with each other, forming a straight channels between the processing channels and/or processing rooms inside the processing modules 1 and external connectors 5 which are arranged to be used as inlet or inlets and outlet or outlets for the relevant processing liquids supplied to and removed from the processing modules respectively. In the configuration as shown in the figures all processing modules 1 are interconnected in parallel, i.e. a processing fluid which is supplied to the system via any connector 5 will be fed to similar feeding points of all processing modules. The same applies for processing fluids which result from the processes which are performed within the individual processing modules: all resulting fluids are collected in the relevant outlet channels which are connected with the relevant (stacked) holes 4 forming one straight channel via which the resulting process fluids can be removed from the processing modules.

Filling elements 6 between the processing modules 1 are arranged to fill the gaps between the processing modules at locations where the heat exchange fingers 2a are not present. The filling elements 6 comprise holes 7 which are in line with the corresponding holes 4 in the neighbouring processing modules 1, thus forming one straight inlet or outlet channel for the supply or removal of processing fluids.

Finally, the processing modules 1 and the heat exchange modules 2 are pressed together between end elements 8. The mutual interconnections may be packed by rubber packing elements like O-rings 8, rubber spacers 9 etc.

## Claims

1. Micro fluidic system, including a stack of process modules (1), each comprising a module body and one or more processing channels and/or processing rooms inside the module's body, at least some of the process modules being flanked by at least one heat exchange module (2) at one or either side of the process module,
wherein each heat exchange module is substantially constituted by one or more heat exchange members made of a solid material having good heat conducting properties and covering at least part of the surface of the relevant processing module or modules.

2. System according to claim 1, comprising one or more fluidic tubes (3) arranged for transportation of a temperature control fluid, each tube protruding through the relevant heat exchange members and being connected with them in a way to allow them to exchange heat between the temperature control fluid and the well conducting material of the heat exchange members.

3. System according to claim 2, the heat exchange members comprising heat exchange fingers (2a) extending between and/or along the surfaces of the relevant processing modules, as well as tube connection portions (2b), arranged for interconnecting the relevant exchange member and at least one of said fluidic tubes.

4. System according to claim 1, the processing modules comprising holes (4) passing through the processing modules and being in communicative connection with said processing channels and/or processing rooms inside the processing module's body and being in line with each other and with external connection means (5) arranged to be used as inlet or inlets and outlet or outlets for the relevant processing liquids supplied to and removed from the processing modules respectively.

5. System according to claim 4, comprising filling elements (6) between the processing modules, arranged to fill any gaps between the processing modules, said filling elements comprising holes (7) providing mutual communicative connections between corresponding holes in the neighbouring processing modules.

6. System according to any of the preceding claims, comprising a microreactor system.
